# EUROPEAN PATENT APPLICATION

(11) **EP 4 700 815 A1**
(43) Date of publication of application: **25.02.2026**
(21) Application number: 25175539.3
(22) Date of filing: 09.05.2025
(51) Int. Cl.: H01H 9/16, H01H 50/08, H01F 7/18, H01H 47/00, H01H 71/04

(54) **SENSOR FOR RELAY POSITION**

(30) Priority: 10.06.2024 US 202418738155
(71) Applicant: Allegro MicroSystems, LLC, Manchester, NH 03103 (US)
(72) Inventor: DAVID, Paul A., Bow, 03304 (US); LATHAM, Alexander, Harvard, 01451 (US); DOOGUE, Michael C., Bedford, 03110 (US); CADUGAN, Bryan, Bedford, 03110 (US)
(74) Representative: South, Nicholas Geoffrey

(57) **Abstract**

A relay 100, 200, 300, 400, comprising: a housing enclosure; a first terminal; a second terminal; an armature 104, 206, 310, 4026 arranged to assume one of an engaged and disengaged position, such that when the armature is in the engaged position the first terminal is electrically coupled to the second terminal by the armature, and when the armature is in the disengaged position, the first terminal is electrically isolated from the second terminal as a result of the armature being removed from at least one of the first terminal and/or the second terminal; a solenoid 130, 318, 318, 418 that is disposed inside the housing enclosure and arranged to actuate the armature between the disengaged position and the engaged position; and a position sensor 142A, 142B, 142C, 142D, 222, 322, 323, 325, 422, 429, 431, 452 that is disposed inside the housing enclosure, the position sensor being arranged to monitor a position of the armature and output an indication of whether the armature is in the disengaged position or the engaged position.

## Description

### BACKGROUND

Relays are electro-mechanical devices that play a crucial role in controlling electrical circuits. They act as switches that can open or close an electrical connection when an external signal is applied. Essentially, relays serve as intermediaries between low-voltage control systems and high-voltage power circuits, ensuring the safety and efficiency of electrical operations. They are used in a wide range of applications, from industrial automation and manufacturing to telecommunications and automotive systems. Relays are especially valuable when there is a need to isolate low-voltage control circuits from high-voltage or high-current circuits to prevent damage to sensitive components or to control complex sequences of operations.

### SUMMARY

According to aspects of the disclosure, a relay is provided, comprising: a housing enclosure; a first terminal; a second terminal; an armature that is disposed inside the housing enclosure, the armature being arranged to assume one of an engaged position and a disengaged position, such that when the armature is in the engaged position the first terminal is electrically coupled to the second terminal by the armature, and when the armature is in the disengaged position, the first terminal is electrically isolated from the second terminal as a result of the armature being removed from at least one of the first terminal and/or the second terminal; a solenoid that is disposed inside the housing enclosure and arranged to actuate the armature between the disengaged position and the engaged position; and a position sensor that is disposed inside the housing enclosure, the position sensor being arranged to monitor a position of the armature and output an indication of whether the armature is in the disengaged position or the engaged position.

In an embodiment, the relay further includes one or more additional terminals that are coupled to the position sensor and arranged to enable an external controller to receive signals from the position sensors.

In an embodiment, the relay further includes a permanent magnet that is coupled to the armature, and the position sensor is arranged to monitor the position of the armature by sensing the position of the permanent magnet.

In an embodiment, the relay further includes a magnetic lock that is arranged to maintain the armature in the engaged position or the disengaged position during periods in which the solenoid is not energized.

In an embodiment, the relay further includes a current sensor that is disposed inside the housing enclosure and configured to measure a level of electrical current through the armature.

In an embodiment, the armature further includes a notch that is formed therein, and the current sensor is disposed adjacent to the notch.

In an embodiment, the relay further includes a connecting member that is actuated by the solenoid and arranged to move the armature between the engaged position and the disengaged position.

In an embodiment, the relay further includes a permanent magnet that is coupled to the connecting member, and the position sensor is arranged to monitor the position of the armature by sensing a position of the permanent magnet.

In an embodiment, the position sensor includes a built-in solenoid driver that is arranged to drive the solenoid.

According to aspects of the disclosure, a relay is provided, comprising: a chassis; a first terminal; a second terminal; a first permanent magnet disposed inside the chassis; an armature that is disposed inside the chassis, the armature being arranged to assume one of an engaged position and a disengaged position, such that when the armature is in the engaged position the first terminal is electrically coupled to the second terminal by the armature, and when the armature is in the disengaged position, the first terminal is electrically isolated from the second terminal as a result of the armature being removed from at least one of the first terminal and/or the second terminal; a connecting member that is coupled to the first permanent magnet and the armature; and a solenoid that is arranged to move the armature between the engaged position and the disengaged position by causing the first permanent magnet to pivot between a first position and a second position; and a position sensor that is disposed adjacent to the armature, the position sensor being arranged to monitor a position of the armature and output an indication of whether the armature is in the disengaged position or the engaged position.

In an embodiment, the chassis includes a first supporting wall extending through an interior of the chassis, the first supporting wall being disposed between the armature and the first permanent magnet, the first supporting wall including a protrusion which the first permanent magnet is arranged to pivot about.

In an embodiment, the armature is disposed between the position sensor and the first supporting wall.

In an embodiment, the chassis includes a second supporting wall that is inserted in a first recess in the first permanent magnet and a third supporting wall that is inserted in a second recess of the first permanent magnet, wherein the first supporting wall and the second supporting wall are arranged to restrict movements of the first permanent magnet as the first permanent magnet pivots about the protrusion.

In an embodiment, the position sensor is disposed between the first supporting wall and the second supporting wall.

In an embodiment, the position sensor is disposed between the first supporting wall and the third supporting wall.

In an embodiment, the position sensor is coupled to an exterior surface of a sidewall of the relay.

In an embodiment, the position sensor is positioned adjacent to the connecting member and arranged to measure a position of the connecting member.

In an embodiment, the relay further includes a second permanent magnet that is coupled to the connecting member, and the position sensor is arranged to monitor the position of the armature by sensing a position of the second permanent magnet.

In an embodiment, the position sensor is coupled to an interior surface of a sidewall of the relay.

In an embodiment, the relay further includes a current sensor that is disposed inside the chassis and arranged to detect an electrical current through the armature.

In an embodiment, the armature includes a notch that is formed therein, and the current sensor is disposed adjacent to the notch.

According to aspects of the disclosure, a relay is provided, comprising: a housing enclosure; a first terminal; a second terminal; a first dielectric barrier that is disposed inside the housing enclosure and coupled to the first terminal; a second dielectric barrier that is disposed inside the housing enclosure and coupled to the second terminal; an armature that is disposed inside the housing enclosure, the armature being arranged to assume one of an engaged position and a disengaged position, such that when the armature is in the engaged position the first terminal is electrically coupled to the second terminal by the armature, and when the armature is in the disengaged position, the first terminal is electrically isolated from the second terminal as a result of the armature being removed from at least one of the first terminal and/or the second terminal; a solenoid that is disposed inside the housing enclosure and arranged to actuate the armature between the disengaged position and the engaged position; and a voltage sensor that is disposed inside the housing enclosure and coupled between first dielectric barrier and the second dielectric barrier, the voltage sensor being arranged to monitor a voltage across the first dielectric barrier and the second dielectric barrier and output an indication of whether an electrical current is flowing through the armature based on the voltage across the first dielectric barrier and the second dielectric barrier falling below a predetermined threshold.

According to aspects of the disclosure, a relay is provided, comprising: a chassis; a first terminal; a second terminal; a first permanent magnet disposed inside the chassis; an armature that is disposed inside the chassis, the armature being arranged to assume one of an engaged position and a disengaged position, such that when the armature is in the engaged position the first terminal is electrically coupled to the second terminal by the armature, and when the armature is in the disengaged position, the first terminal is electrically isolated from the second terminal as a result of the armature being removed from at least one of the first terminal and/or the second terminal; a connecting member that is coupled to the first permanent magnet and the armature; and a solenoid that is arranged to move the armature between the engaged position and the disengaged position by causing the first permanent magnet to pivot between a first position and a second position; and a position sensor that is disposed adjacent to the armature, the position sensor being arranged to monitor a position of the armature and output an indication of whether the armature is in the disengaged position or the engaged position.

According to aspects of the disclosure, a relay is provided, comprising: a housing enclosure; a first terminal; a second terminal; an armature that is disposed inside the housing enclosure, the armature being arranged to assume one of an engaged position and a disengaged position, such that when the armature is in the engaged position the first terminal is electrically coupled to the second terminal by the armature, and when the armature is in the disengaged position, the first terminal is electrically isolated from the second terminal as a result of the armature being removed from at least one of the first terminal and/or the second terminal; a solenoid that is disposed inside the housing enclosure and arranged to actuate the armature between the disengaged position and the engaged position; and a current sensor that is arranged to monitor the armature and output an indication of whether an electrical current is flowing through the armature.

According to aspects of the disclosure, a relay is provided, comprising: a chassis; a first terminal; a second terminal; a first permanent magnet disposed inside the chassis; an armature that is disposed inside the chassis, the armature being arranged to assume one of an engaged position and a disengaged position, such that when the armature is in the engaged position the first terminal is electrically coupled to the second terminal by the armature, and when the armature is in the disengaged position, the first terminal is electrically isolated from the second terminal as a result of the armature being removed from at least one of the first terminal and/or the second terminal; a connecting member that is coupled to the first permanent magnet and the armature; and a solenoid that is arranged to move the armature between the engaged position and the disengaged position by causing the first permanent magnet to pivot between a first position and a second position; and a first position sensor that is disposed adjacent to the armature, the first position sensor being arranged to output a first signal that is indicative of a position of the armature; a second position sensor that is disposed adjacent to the armature, the second position sensor being arranged to output a first signal that is indicative of a position of the armature; and an arbiter circuit that is configured to detect whether the first signal is in agreement with the second signal and output an indication of whether the armature is in the engaged position or the disengaged position when the first signal and the second signal are in agreement.

In an embodiment, the arbiter circuit is further configured to output an indication of an error when the first signal and the second signal are not in agreement.

In an embodiment, the arbiter circuit is integrated into one of the first position sensor and the second position sensor.

### BRIEF DESCRIPTION OF THE DRAWINGS

The foregoing features may be more fully understood from the following description of the drawings in which:
FIG. 1 is a diagram of an example of an electromagnetic relay, according to aspects of the disclosure;
FIG. 2A is a diagram of an example of an electromagnetic relay, according to aspects of the disclosure;
FIG. 2B is a diagram of an example of an electromagnetic relay, according to aspects of the disclosure;
FIG. 2C is a diagram of an example of an electromagnetic relay, according to aspects of the disclosure;
FIG. 3A is a diagram of an example of an electromagnetic relay, according to aspects of the disclosure;
FIG. 3B is a diagram of an example of an electromagnetic relay, according to aspects of the disclosure;
FIG. 3C is a diagram of an example of an electromagnetic relay, according to aspects of the disclosure;
FIG. 3D is a diagram of an example of an electromagnetic relay, according to aspects of the disclosure;
FIG. 3E is a diagram of an example of an armature, according to aspects of the disclosure;
FIG. 4A is a diagram of an example of an electromagnetic relay, according to aspects of the disclosure;
FIG. 4B is a diagram of an example of an electromagnetic relay, according to aspects of the disclosure;
FIG. 4C is a diagram of an example of an electromagnetic relay, according to aspects of the disclosure;
FIG. 4D is a diagram of an example of an electromagnetic relay, according to aspects of the disclosure;
FIG. 5 is a diagram of an example of a position sensor, according to aspects of the disclosure; and
FIG. 6 is a diagram of an example of a current sensor, according to aspects of the disclosure.

### DETAILED DESCRIPTION

Electromagnetic relays are used in various automated control applications. For example, electromagnetic relays are used in automotive applications and industrial machinery applications. In general, an electromagnetic relay would be connected to a controller, which would open and close the relay in accordance with a control algorithm. Usually, after opening or closing the relay, the controller may perform a follow-up action, such as turning on or off another switch. If the relay becomes stuck and does not change states as requested by the controller, the subsequent action may cause electrical damage to the system of which the relay is part. For example, if the relay is stuck closed, electrical current may rush into a part of the system where it is not supposed to and cause damage.

According to aspects of the disclosure, an improved relay is provided that includes a built-in position sensor. The position sensor may be configured to detect the position of the armature of the relay or another element that moves together with the armature. The position sensor can be used by a controller to determine whether the relay is indeed open or closed (following the issuance of an open/close signal by the controller). Having a built-in position sensor can greatly improve the reliability of the relay making it suitable for use in many safety-critical applications. The relay may have additional pins that enable the controller to connect to the position sensor and receive signals from it. In another aspects, the relay may optionally include a built-in current sensor. Having built-in sensors in the relay may help minimize the board space needed for a power relay system. Even low-resolution current sensing, and or position detection, may prevent hot switching.

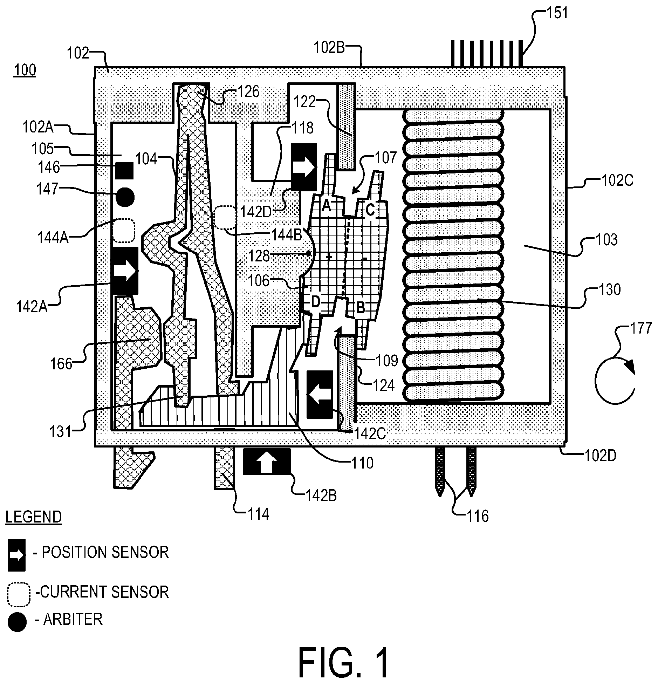

FIG. 1 is a schematic diagram of an example of a relay 100, according to aspects of the disclosure. As illustrated, relay 100 may include a chassis 102 having sidewalls, 102A, 102B, 102C, and 102D. The chassis 102 may be part of a housing enclosure of relay 100. The chassis may include cavities 103 and 105. A solenoid 130 may be disposed in cavity 105. Solenoid 130 may be coupled to solenoid terminals 116 which are used to power the solenoid 130. A magnetic member 106 may be wedged between supporting walls 122 and 124 of chassis 102, such that supporting wall 122 is inserted into a slot 107 of magnetic member 106, and supporting wall 124 is inserted into a slot 109 of magnetic member 106. The magnetic member 106 may be coupled to a supporting wall 118 of chassis 102 via a pin 128. The magnetic member 106 may include a permanent magnet, and it may be arranged to actuate a connecting member 110.

The polarity of magnetic member 106 is indicated by the plus and minus signs that are superimposed over the depiction of magnetic member 106. Supporting walls 122 and 124 may be formed of metal, and magnetic member 106 may be attracted to them. Magnetic member 106 may include prongs A, B, C, and D, which may be magnetized. Magnetic member 106 may be arranged to pivot about pin 128 between a first position and a second position. When magnetic member 106 is in the first position, prongs A and B are in contact with supporting walls 122 and 124, and relay 100 is closed. When magnetic member 106 is in the second position, prongs C and D are in contact with supporting walls 122 and 124, and relay 100 is open. Because magnetic member 106 is attracted to supporting walls 122 and 124, the magnetic member 106 is latched in either the first or second position until solenoid 130 is energized again. In other words, the switch between the first position and the second position is performed by energizing solenoid 130 with the appropriate polarity and turning it off afterwards. Once magnetic member 106 is put in the first position, magnetic member 106 would stay in this position until the polarity of solenoid 130 is switched and solenoid 130 is energized again.

Connecting member 110 may be arranged to engage leg 131 of armature 104. Armature 104 may further include a top end 126, a leg 131, and a leg 114. Leg 114 may extend through sidewall 102D of chassis 102, and its end may serve as one of the terminals of relay 100. The top end 126 may be inserted inside a recess in sidewall 102B of chassis 102. The end of leg 131 may be inserted into a recess formed in connecting member 110. A conductive member 166 may be disposed adjacent to armature 104. Conductive member 166 may extend through sidewall 102D of chassis 102, and its end may serve as another one of the terminals of relay 100.

When solenoid 130 is energized (with a first polarity), the magnetic field generated by solenoid 130 may attract magnetic member 106 and cause it to pivot clockwise about pin 128, after which magnetic member 106 would latch in the first position. The clockwise direction is shown by arrow 177. As magnetic member 106 rotates, it would move connecting member 110 towards sidewall 102A. Connecting member 110, in turn, would push leg 131 of armature 104 against conductive member 166, causing conductive member 166 to come into electrical contact with armature 104. When conductive member 166 is in electrical contact with armature 104, electrical current may flow from leg 114 of armature 104 to conductive member 166 - it will be recalled that the ends of leg 114 and conductive member 166 serve as terminals of relay 100. To open relay 100, solenoid 130 may be energized in the opposite direction, which would cause magnetic member 106 to assume the second position and cause leg 131 to disconnect from conductive member 166.

Relay 100 may be provided with a position sensor 142A. Position sensor 142A may be disposed in cavity 105, and it may be configured to detect the position of leg 131 of armature 104. Position sensor 142A may detect a magnetic field that is generated by leg 131 and use the detected magnetic field to determine the position of leg 131. The magnetic field generated by leg 131 may be the product of eddy currents that are induced in leg 131. In some implementations, position sensor 142A may be an inductive sensor including a built-in excitation coil (or built-in excitation coil driver). In such implementations, the excitation coil may induce eddy currents in leg 131, which would cause leg 131 to generate a reflected magnetic field that is subsequently detected by sensor 142A and used to measure the position of leg 131.

Sensor 142A may provide an indication of the reflected magnetic field to a controller 146. If the magnitude of the magnetic field is greater than or equal to a threshold, controller 146 may determine that relay 100 is closed. Otherwise, if the magnitude is less than the threshold, controller 146 may determine that relay 100 is open. The operating principle behind this example is that the magnitude of the magnetic field is proportional to the proximity of leg 131 to sensor 142A, and when the distance between leg 131 and sensor 142A is sufficiently short, leg 131 can be deemed as having come in physical and/or electrical contact with conductive member 166.

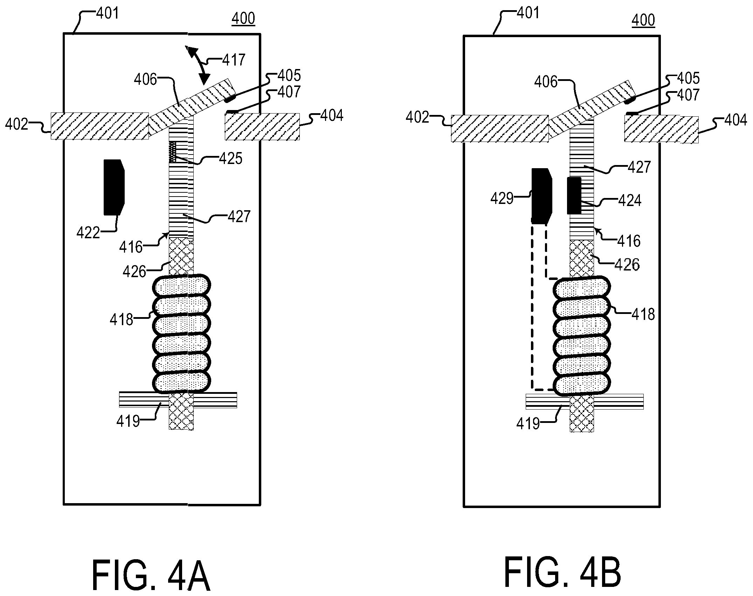

Relay 100 may be provided with a position sensor 142B. Position sensor 142B may be disposed on the outer surface of sidewall 102D between sidewall 102D and an external enclosure (not shown) of relay 100. In one example, position sensor 142B may be an inductive sensor including a built-in excitation coil (or a built-in excitation coil driver). In such implementations, the excitation coil may induce eddy currents in leg 131, which would cause leg 131 to generate a reflected magnetic field that is subsequently detected by sensor 142B and used to measure the position of leg 131. Position sensor 142B may output, to controller 146, an indication of the magnitude of the reflected magnetic field. If the magnitude is greater than or equal to a threshold, controller 146 may determine that relay 100 is closed. If the magnitude is less than the threshold, controller 146 may determine that the relay is open. Alternatively, in some implementations, position sensor 142 may be configured to detect the position of connecting member 110. In such implementations, connecting member 111 may be formed of plastic and it may include a metal-plated region. The excitation coil, may induce eddy currents in the metal plated region, which result in a magnetic field that is detected by sensor 142B. (*See also* the example of FIG. 4A.)

Although, in the present example, sensors 142A-B are provided with built-in excitation coils, alternative implementations are possible in which the coils are separate from sensors 142A-B. In such implementations, each of the excitation coils may be disposed inside chassis 102 and/or on one of the sidewalls of chassis 102.

In another example, position sensor 142B may be configured to passively detect the position of connecting member 110, and it may include Hall elements, giant magnetoresistance (GMR) elements, tunneling magnetoresistance (TMR) elements, or any other suitable type of magnetic field sensing elements. Specifically, sensor 142B may measure the magnitude of the magnetic field generated by magnetic member 106 at the location where position sensor 142B is placed. Sensor 142B may then output an indication of the magnitude to the controller 146. If the magnitude is greater than or equal to a threshold, controller 146 may determine that relay 100 is closed. If the magnitude is less than the threshold, controller 146 may determine that the relay is open. The operating principle behind this example is that the magnitude of the magnetic field of magnetic member 106 at the location of sensor 142B is dependent on the position of magnetic member 106. If magnetic member 106 is tilted towards sidewall 102C, and relay 100 is closed, the magnetic field will have a first magnitude at the location of sensor 142B. However, if magnetic member 106 is tilted towards sidewall 102A, and relay 100 is open, the magnetic field will have a second value. Thus, by monitoring the value of the magnetic field of magnetic member 106 at the location of a magnetic field sensor, the controller 146 may discern whether relay 100 is closed or open.

Relay 100 may be provided with a position sensor 142C. Position sensor 142C may be disposed inside chassis 102 between supporting wall 124 and connecting member 110. Position sensor 142C may be configured to passively detect the position of magnetic member 106, and it may include Hall elements, giant magnetoresistance (GMR) elements, tunneling magnetoresistance (TMR) elements, or any other suitable type of magnetic field sensing elements. Position sensor 142 may be positioned inside chassis 102 between supporting wall 124 and connecting member 110. Specifically, sensor 142C may measure the magnitude of the magnetic field generated by magnetic member 106. Sensor 142C may then output an indication of this magnitude to controller 146. If the magnitude of the magnetic field is greater than or equal to a threshold, controller 146 may determine that relay 100 is closed. Otherwise, if the magnitude is less than the threshold, controller 146 may determine that relay 100 is open.

Relay 100 may be provided with a position sensor 142D. Position sensor 142D may be configured to passively detect the position of magnetic member 106 and may include Hall elements, giant magnetoresistance (GMR) elements, tunneling magnetoresistance (TMR) elements, or any other suitable type of magnetic field sensing elements. Position sensor 142 may be placed inside chassis 102 between supporting wall 122 and supporting wall 118. Specifically, position sensor 142D may measure the magnitude of the magnetic field generated by magnetic member 106. Sensor 142D may then output an indication of this magnitude to the controller 146. If the magnitude of the magnetic field is less than or equal to a threshold, controller 146 may determine that relay 100 is closed. Otherwise, if the magnitude is greater than the threshold, controller 146 may determine that relay 100 is open.

Relay 100 may be provided with a current sensor 144A. Current sensor 144A may be positioned in cavity 105, adjacent to leg 131 of armature 104, and it may be arranged to measure the level of electrical current through leg 131. Furthermore, relay 100 may be provided with a current sensor 144B. Current sensor 144B may be positioned in cavity 105, adjacent to leg 114 of armature 104, and it may be arranged to measure the level of electrical current through leg 114. Each of current sensors 114A-B may provide its respective output to controller 146. According to the present example, current sensor 144A is mounted on sidewall 102A. However, it will be understood that current sensor 144A can be mounted in any location where the magnetic field originating from leg 131 of armature 104 can be reliably detected. (*e.g.*, another location that is adjacent to leg 131). According to the present example, current sensor 144B is mounted on supporting wall 118. However, it will be understood that current sensor 144B can be mounted in any location where the magnetic field originating from leg 114 of armature 104 can be reliably detected (*e.g.*, another location that is adjacent to leg 114). For example, in one implementation, current sensor 144A may be mounted on (or otherwise attached to) leg 131 of armature 104 and/or current sensor 144B may be mounted on (or otherwise attached to) leg 114 of armature 105.

Controller 146 may include a general-purpose processor, an application-specific integrated circuit (ASIC), a field-programmable gate array (FPGA), or any other suitable type of processing circuitry. In the present example, controller 146 is depicted as being integrated into relay 100. However, in most practical applications, controller 146 would be provided externally of relay 100 and would not be part of relay 100. In such applications, controller 146 may be connected to each of sensors 142A-D and 144A-B via respective terminals 151. Terminals 151 may be provided in relay 100 to enable communication between controller 146 and sensors 142A-D and 144A-B, allowing controller 146 to receive the respective outputs of each of sensors 142A-D and 144A-B. As noted above, controller 146 may use the output of sensors 142A-D to determine whether relay 100 is closed. Furthermore, controller 146 may use the output of sensors 144A-B to determine the level of the electrical current that is flowing through relay 100. The information obtained from sensors 142A-B and 144A-D may be incorporated into various control decisions made by controller 146 during its operation.

In the present example, relay 100 is provided with a plurality of position sensors. However, in some implementations, relay 100 may be provided with only one position sensor. For example, relay 100 may be provided with only one of sensors 142A-D. Additionally or alternatively, in some implementations, relay 100 may be provided with only one current sensor. For example, relay 100 may be provided with only one of sensors 144A-B.

In implementations in which relay 100 is provided with multiple position sensors, relay 100 may be equipped with an arbiter 147. Arbiter 147 may include a general-purpose processor, an application-specific integrated circuit (ASIC), a field-programmable gate array (FPGA), or any other suitable type of digital or analog electronic circuitry. Arbiter 147 may be configured to receive the outputs of multiple position sensors (e.g., multiple ones of position sensors 142A-D) and determine whether they are in agreement. The outputs may be in agreement when all outputs indicate that relay 100 is closed or when all outputs indicate that relay 100 is open. The outputs may not be in agreement when at least one of the outputs indicates that relay 100 is closed and at least another one of the outputs indicates that relay 100 is open. When the outputs are not in agreement, arbiter 147 may generate an error signal. The error signal may be provided to controller 146 and/or output via one of terminals 151. Although, in the present example, arbiter 147 is separate from controller 146, alternative implementations are possible in which arbiter 147 is integrated into controller 146.

FIG. 1 is provided as an example only. Although FIG. 1 shows an example of a latching relay, it will be understood that the concepts and ideas provided throughout the disclosure can be applied to other types of electromagnetic relays, switches, or devices. The specific configuration of the relay, the type of sensors used, the number of sensors, and the placement of the sensors can vary widely depending on the particular application and design requirements.

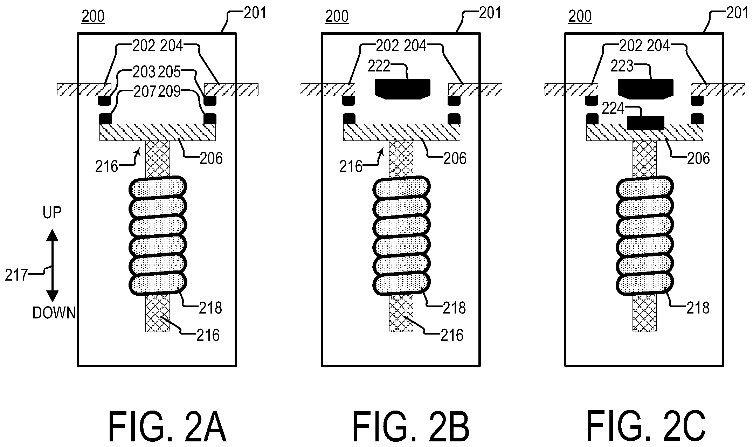

FIG. 2A is a schematic diagram of an example of a plunger-type relay 200, according to aspects of the disclosure. As illustrated, relay 200 may include a housing enclosure 201 and terminals 202 and 204 that extend through the walls of housing enclosure 201. Disposed inside the housing enclosure 201 may be a shaft 216, a solenoid 218, and an armature 206. In this example, shaft 216 is made of metal. Shaft 216 may be inserted in solenoid 218, and coupled to armature 206. Contacts 203, 205, 207, and 209 may be formed on armature 206 and terminals 202 and 204, respectively. In operation, solenoid 218 may actuate shaft 216, causing it to move up and down in the direction indicated by arrow 217. When relay 200 is closed, armature 206 is in the "up position," and contacts 207 and 209 touch contacts 203 and 205, closing the electrical path from terminal 202 to terminal 204. When relay 200 is open, armature 206 is in the "down position," and contacts 207 and 209 may be separated from contacts 203 and 205, thus preventing electrical current from flowing from terminal 202 to terminal 204.

FIG. 2B is a diagram of relay 200, in accordance with another implementation. In this example, relay 200 is provided with a position sensor 222, which may be disposed inside housing enclosure 201. Position sensor 222 may be placed above armature 206 and can be an inductive sensor. Position sensor 222 may include a built-in excitation coil configured to induce eddy currents in armature 206. The eddy currents may cause armature 206 to generate a reflected magnetic field that is subsequently measured by sensor 222. When relay 200 is closed, armature 206 is in greater proximity to sensor 222, resulting in a higher magnetic flux density at the location of sensor 222. When relay 200 is open, armature 206 is further away from sensor 222, leading to a lower magnetic flux density at the sensor's 222 location. In some implementations, when the strength of the reflected magnetic field, as sensed by sensor 222, is greater than or equal to a threshold, the output of sensor 222 may indicate that relay 200 is closed. Conversely, when the strength of the reflected magnetic field is less than the threshold, the output of sensor 222 may indicate that relay 200 is open.

FIG. 2C is a diagram of relay 200, in accordance with another implementation. In this example, sensor 222 is provided with a position sensor 223 and a target 224. Target 224 may include a permanent magnet mounted on armature 206. Position sensor 223 may be disposed inside housing enclosure 201 above target 224 and can passively detect the position of target 224. Position sensor 223 may include Hall elements, giant magnetoresistance (GMR) elements, tunneling magnetoresistance (TMR) elements, or any other suitable type of magnetic field sensing elements. When relay 200 is closed, target 224 is in greater proximity to sensor 223, resulting in a higher magnetic flux density at the location of sensor 223. When relay 200 is open, target 224 is further away from sensor 223, causing the magnetic field generated by target 224 to have a lower magnetic flux density at the location of sensor 223. In some implementations, when the strength of the magnetic field generated by target 224, as sensed by sensor 223, is greater than or equal to a threshold, the output of sensor 223 may indicate that relay 200 is closed. Conversely, when the strength of the magnetic is less than the threshold, the output of sensor 223 may indicate that relay 200 is open.

Although, in the example of FIG. 2B, sensor 222 is disposed above armature 206, alternative implementations are possible in which sensor 222 is disposed below armature 206. In such implementations, a decrease in the sensed magnetic field may indicate that relay 400 is closed, and an increase in the sensed magnetic field may indicate that relay 400 is opened. Similarly, although, in the example of FIG. 2C, sensor 223 is disposed above armature 206, alternative implementations are possible in which sensor 223 is disposed below armature 206. In such implementations, a decrease in the sensed magnetic field may indicate that relay 400 is closed, and an increase in the sensed magnetic field may indicate that relay 400 is opened.

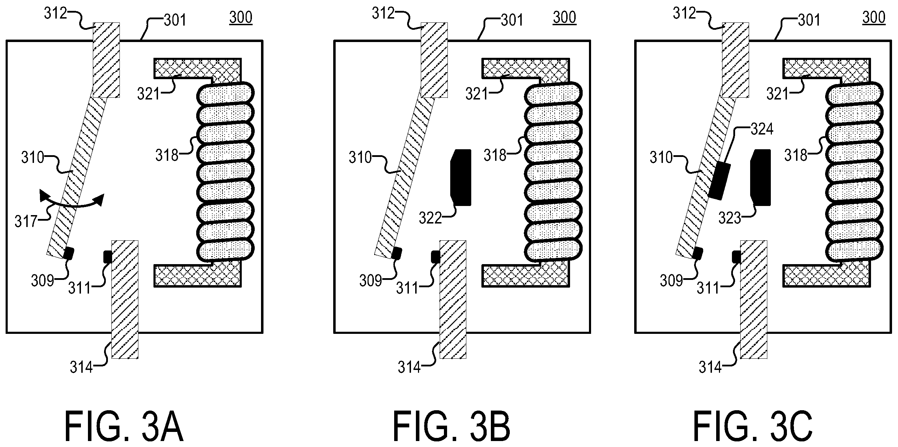

FIG. 3A is a schematic diagram of a hinged relay 300, according to aspects of the disclosure. As illustrated, relay 300 may include a housing enclosure 301 having terminals 312 and 314 that extend through the walls of housing enclosure 301. Inside housing enclosure 301 are an armature 310, a solenoid 318, and a solenoid core 321. Armature 310 may be hingedly coupled to terminal 312 and arranged to pivot about terminal 312 in the direction indicated by arrow 317. Solenoid 318 is wound around solenoid core 321 and arranged to actuate armature 310. Contact points 309 and 311 may be provided on armature 310 and terminal 314, respectively. When relay 300 is closed, contact points 309 and 311 may come into electrical contact, allowing electrical current to flow from terminal 312 to terminal 314. When relay 300 is open, contact point 309 may be separated from contact point 311, preventing electrical current from flowing between terminals 314 and 312.

FIG. 3B is a diagram of relay 300, in accordance with another implementation. In this example, relay 300 is equipped with a position sensor 322. Position sensor 322 may be disposed inside housing enclosure 301. Position sensor 322 may be located adjacent to armature 310 and it may be an inductive sensor. Position sensor 322 may include a built-in excitation coil configured to induce eddy currents in armature 310. The eddy currents may cause armature 310 to generate a reflected magnetic field, which is subsequently measured by sensor 322. When relay 300 is closed, armature 310 is closer to sensor 322, resulting in a higher magnetic flux density at the location of sensor 322. When relay 300 is open, armature 310 is further away from sensor 322, causing the reflected magnetic field to have a lower magnetic flux density at the location of sensor 322. In some implementations, when the strength of the reflected magnetic field, as sensed by sensor 322, is greater than or equal to a threshold, the output of sensor 322 may indicate that relay 300 is closed. Conversely, when the strength of the reflected magnetic field is less than the threshold, the output of sensor 322 may indicate that relay 300 is open.

FIG. 3C is a diagram of relay 300, in accordance with another implementation. In this example, relay 300 is provided with a position sensor 323 and a target 324. Target 324 may include a permanent magnet mounted on armature 310. Position sensor 323 may be disposed in housing enclosure 301 at a location adjacent to armature 310. Position sensor 323 may be configured to passively detect the position of target 324 and it may include Hall elements, giant magnetoresistance (GMR) elements, tunneling magnetoresistance (TMR) elements, or any other suitable type of magnetic field sensing elements. The position of target 324 may be used as a proxy for the position of armature 310. When relay 300 is closed, target 324 is situated in greater proximity to sensor 323, resulting in a higher magnetic flux density at the location of sensor 323. When relay 300 is open, target 324 is situated further away from sensor 323, causing the magnetic field generated by target 324 to have a lower magnetic flux density at the location of sensor 323. In some implementations, when the strength of the magnetic field generated by target 324, as sensed by sensor 323, is greater than or equal to a threshold, the output of sensor 323 may indicate that relay 300 is closed. Conversely, when the strength of the magnetic field generated by target 324, as sensed by sensor 323, is less than the threshold, the output of sensor 323 may indicate that relay 300 is open.

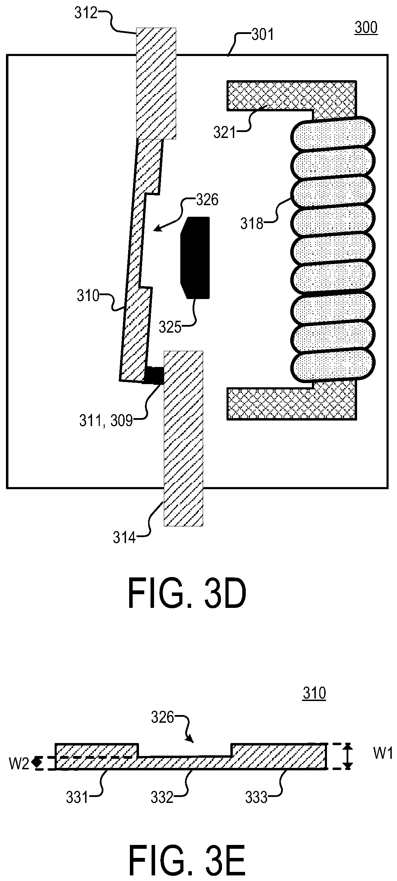

FIG. 3D is a diagram of relay 300, in accordance with another implementation. In this example, relay 300 is provided with a current sensor 325, and armature 310 has a notch 326 formed therein. As illustrated in FIG. 3E, armature 310 may have end portions 331 and 333 and a middle portion 332. Notch 326 may be formed in middle portion 332, causing middle portion 332 to have a narrower width than end portions 331 and 333. Specifically, end portions 331 and 333 may each have a width W1, while middle portion 332 may have a width W2, where W1 > W2. This narrowing of middle portion 332 increases the density of electrical current running through it, which in turn could enhance the magnetic coupling between armature 310 and current sensor 325. In one aspect, current sensor 325 may be disposed in housing enclosure 301, adjacent to notch 326. In operation, sensor 325 may measure the level of electrical current through middle portion 332 of armature 310. As discussed previously with respect to FIG. 1, the measurements made by current sensor 325 may be provided to a controller configured to make one or more control decisions based on the measurements.

FIG. 4A is a schematic diagram of an example of a hinged-type relay 400, according to aspects of the disclosure. As illustrated, relay 400 may include a housing enclosure 401 with terminals 402 and 404 extending through its walls. Disposed inside housing enclosure 401 may be a shaft 416, a solenoid 418, an armature 406, and a magnetic lock 419. In this example, shaft 416 includes portions 427 and 426. Portion 426 may be formed of metal, while portion 427 may be formed of dielectric material (e.g., plastic) and designed to electrically isolate portion 426 from armature 406. Portion 426 may have a region 425 that is plated with a layer of metal. Shaft 416 may be inserted into solenoid 418 and coupled to armature 406. Contacts 405 and 407 may be formed on armature 406 and terminal 404, respectively.

Armature 406 may be hingedly coupled to terminal 402 and arranged to pivot about terminal 402. In operation, solenoid 418 may actuate shaft 416 and cause it to move up and down in the direction indicated by arrow 417. When relay 400 is closed, armature 406 is in the "lowered" position, contacts 405 and 407 are in electrical contact with each other, and the electrical path from terminal 402 to terminal 404 is closed. When relay 400 is open, armature 406 is in the "raised" position, and contacts 405 and 407 may be separated from each other, preventing electrical current from flowing between terminals 402 and 404. Magnetic lock 419 may be coupled to shaft 416 and arranged to latch relay 400 in the "closed" or "open" position.

A position sensor 422 may be disposed inside housing enclosure 401. Position sensor 422 may be disposed adjacent to the metal-plated region 425 of portion 427. Sensor 422 may be an inductive sensor, including a built-in excitation coil that induces eddy currents in the metal-plated region 425. The eddy currents cause the metal-plated region 425 to generate a reflected magnetic field that is subsequently measured by sensor 422 to determine the position of shaft 416. When relay 400 is closed, region 425 would be situated closer to sensor 422, causing the reflected magnetic field to have a higher magnetic flux density at the location of sensor 422. When relay 400 is open, region 425 would be situated further away from sensor 422, causing the reflected magnetic field to have a lower magnetic flux density at the location of sensor 422. In some implementations, when the strength of the reflected magnetic field, as sensed by sensor 422, is greater than or equal to a threshold, the output of sensor 422 may indicate that relay 400 is closed. Conversely, when the strength of the reflected magnetic field is less than the threshold, the output of sensor 422 may indicate that relay 400 is open.

FIG. 4B is a schematic diagram of relay 400, in accordance with another implementation. In this example, position sensor 422 and metal-plated region 425 are omitted, and a position sensor 429 is provided instead. Position sensor 429 includes an integrated driver circuit. The driver circuit may be arranged to drive solenoid 418 and it may be formed on the same die as the sensing circuitry of sensor 422. Moreover, the driver circuit and the sensing circuitry may be encapsulated in the same semiconductor package as the sensing circuitry of position sensor 429. Position sensor 429 may be disposed inside housing enclosure 401, as shown. Optionally, position sensor 429 may include coil protection needed for the safety of the electrical system of which relay 400 is part.

Furthermore, in the example of FIG. 4B, a target 424 may be mounted on portion 427 of shaft 406, and sensor 422 may be configured to detect the position of the target. The detected position of the target could be subsequently used to determine whether relay 400 is open or closed. Position sensor 429 may be configured to passively detect the position of target 424 and may include Hall elements, giant magnetoresistance (GMR) elements, tunneling magnetoresistance (TMR) elements, or any other suitable type of magnetic field sensing elements. When relay 400 is closed, target 424 may assume a first position, and when the relay 400 is open, target 424 may assume a second position. Position sensor 429 may detect the magnetic field generated by target 424. The magnetic field may have a first value when target 424 is in the first position and a second value when target 424 is in the second position. Thus, the output of position sensor 429 may have a first value when relay 400 is closed and a second value when relay 400 is open, and it can be used to determine whether relay 400 is closed or open.

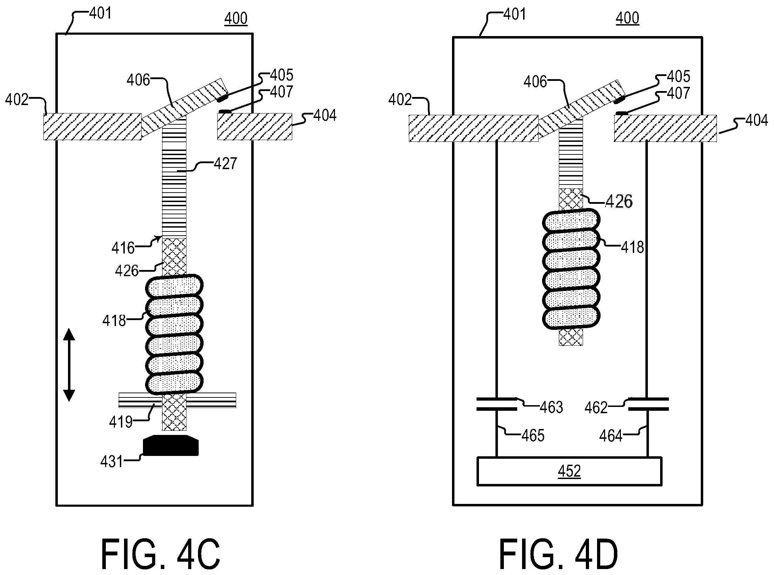

FIG. 4C is a schematic diagram of relay 400, in accordance with another implementation. In this example, position sensor 422 is omitted, and a position sensor 431 is disposed underneath shaft 416 to take advantage of a permanent magnet that is part of magnetic lock 419 to detect whether relay 400 is closed or open. Position sensor 431 may be disposed inside housing enclosure 401. Position sensor 431 may be configured to passively detect the position of the magnet and may include Hall elements, giant magnetoresistance (GMR) elements, tunneling magnetoresistance (TMR) elements, or any other suitable type of magnetic field sensing elements. When relay 400 is closed, the magnet may assume a first position, and when the relay 400 is open, the magnet may assume a second position. Position sensor 431 may detect the magnetic field generated by the magnet. The magnetic field may have a first value when the magnet is in the first position and a second value when the magnet is in the second position. Thus, the output of position sensor 431 may have a first value when relay 400 is closed and a second value when relay 400 is open, and it can be used to determine whether relay 400 is closed or open. The example of FIG. 4C is similar to the example of FIG. 1, in which magnetic member 106 operates as a magnetic lock and sensors 412C-D are used to monitor the position of magnetic member 106.

FIG. 4D is a schematic diagram of relay 400 in accordance with yet another implementation. In this example, relay 400 is not provided with a magnetic field sensor, such as sensor 422, and instead, it is equipped with a sensing circuit 452. Sensing circuit 452 is coupled to a capacitor 463 via a line 465, and capacitor 463 is coupled to terminal 402. Sensing circuit 452 is also coupled to a capacitor 462 via a line 464, and capacitor 462 is coupled to terminal 404. Sensing circuit 452 is configured to detect whether relay 400 is closed or open. In operation, sensing circuit 452 may inject a tone on line 465 and detect whether the same tone is received on line 464. If the tone is received, sensing circuit 452 may determine that relay 400 is closed. If the tone is not received, sensing circuit 452 may determine that relay 400 is open. In some implementations, sensing circuit 452 may output a signal indicating whether relay 400 is open or closed. The signal may have a first value when relay 400 is open and a second value, different from the first, when relay 400 is closed. The signal may be output on one or more terminals (not shown) of relay 400. Capacitors 462 and 463 may provide a dielectric barrier between sensing circuit 452 and terminals 402 and 404. Such dielectric barrier can be advantageous in high-power applications, where currents from terminals 402 and 404 could damage circuit 452.

FIGS. 1, 2B-C, 3B-C, and 4A-C show examples of position sensors 142A-D, 222, 223, 322, 323, 422, and 431, respectively. Each of these sensors is a magnetic field sensor including one or more magnetic field sensing elements. In one example, any given one of the position sensors may generate a binary signal indicative of whether the sensor's respective relay is open or closed. If the signal has a first value (e.g., '0'), it may indicate that the sensor's respective relay is open. Otherwise, if the signal has a second value (e.g., '1'), it may indicate that the sensor's respective relay is closed. To generate the binary signal, the processing circuitry of any of the position sensors may perform the following steps. First, the processing circuitry may receive a magnetic field signal generated by the magnetic field sensing elements of the sensor in response to a magnetic field. Next, the processing circuitry may determine whether a predetermined condition is satisfied by the magnetic field signal. If the predetermined condition is satisfied, the processing circuitry may set the binary signal to the first value. Otherwise, if the predetermined condition is not satisfied, the processing circuitry may set the binary signal to the second value. In one example, the predetermined condition may be satisfied when the value of the magnetic field signal is below a predetermined threshold. However, the present disclosure is not limited to any specific condition being used.

Alternatively, in some implementations, any of position sensors 222, 223, 322, 323, 422, 429 and 431 may output a signal that is interpreted by a controller or other circuitry. In such implementations, the controller or other circuitry may detect whether the output of the position sensor satisfies a predetermined condition and determine whether the sensor's corresponding relay is open or closed based on the outcome of the detection.

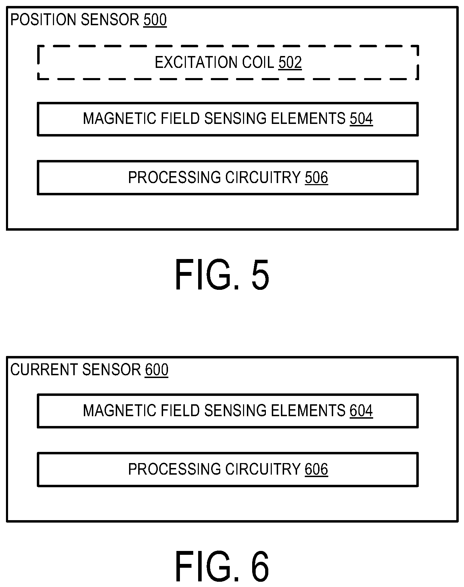

FIG. 5 is a schematic diagram of a position sensor 500, according to aspects of the disclosure. Sensor 500 may be the same or similar to any of position sensors 142A-D, 222, 223, 322, 323, 422 and 431. As illustrated, sensor 500 may optionally include an excitation coil 502. In addition, sensor 500 may include one or more magnetic field sensing elements 504 and a processing circuitry 506. The processing circuitry 506 may include any suitable type of digital or analog circuitry. By way of example, the processing circuitry 506 may receive a magnetic field signal that is generated by sensing elements 504 in response to a magnetic field. Processing circuitry 506 may perform offset or gain adjustments to the magnetic field signal. And also, processing circuitry 506 may generate an output signal based on the adjusted signal. In one example, the output signal may be the binary signal that is discussed above. In another example, the output signal may be an analog or digital signal indicating the strength of the magnetic field that is being sensed by sensor 500. In yet another example, the output signal may be an analog or digital signal indicating the position (or displacement) of a target whose position is being measured. In the example of FIGS. 2A-4D, the target whose position is measured is either a relay armature or a shaft (or another element) that is used to actuate the relay armature, or a permanent magnet mounted on the armature, shaft, or other element. Stated succinctly, the present disclosure is not limited to any specific implementation of the output signal of position sensor 500.

FIG. 6 is a schematic diagram of a current sensor 600, according to aspects of the disclosure. Sensor 600 may be the same or similar to any of current sensors 144A-B and 325. As illustrated, sensor 600 may include one or more magnetic field sensing elements 604 and a processing circuitry 606. The processing circuitry 606 may include any suitable type of digital or analog circuitry. By way of example, the processing circuitry 606 may receive a magnetic field signal that is generated by sensing elements 604. The magnetic field signal may be generated in response to a magnetic field. The magnetic field may be generated by a conductor, such as a relay armature, as a result of electrical current flowing through the conductor. Next, processing circuitry 606 may perform offset or gain adjustments to the magnetic field signal. And finally, processing circuitry 606 may generate an output signal based on the adjusted signal. In one example, the output signal may indicate the level of electrical current through the conductor.

In some implementations, each of the sensors 142A-D, 144A-B 222, 223 322, 323, 325, 422, 429 may be implemented using off-the-shelf parts. Examples of position sensors that are available on the market include Part. No. A1346 and Part. No. A1304, which are marketed and sold by Allegro Microsystems of Manchester, NH. An example of a current sensor that is available on the market includes Part. No. A1365, which is marketed and sold by Allegro Microsystems of Manchester, NH.

The examples presented with respect to FIGS. 1-6 are not mutually exclusive but rather serve as individual examples to illustrate various aspects of the disclosed technology. It is important to note that these examples are not limited to existing in isolation; rather, the features and concepts described within these examples can be combined and integrated in further embodiments. For instance, any (or each) of the relays shown in FIGS. 2A-4C may include terminals (*e.g.*, pins) that are connected to the position sensor that is disposed inside the housing enclosure and configured to detect whether the armature of the position sensor is open or closed. These terminals may be used by an external controller (or other circuitry) to receive signals from the position sensor, which can be subsequently used to determine the position sensor's respective relay is open or close. Similarly, any (or each) of the relays shown in FIGS. 2A-4C may include terminals (*e.g*., pins) that are connected to a current sensor that is disposed inside the housing enclosure. These terminals may be used by an external controller (or other circuitry) to receive signals from the position sensor, which can be subsequently used to determine the level of electrical current through the current sensor's respective relay. The term "terminal", when permitted by context, may refer to a pin, a contact pad, a receptacle, a socket, and/or any other element that is arranged to form an electrical connection.

A magnetic-field sensing element can be, but is not limited to, a Hall Effect element a magnetoresistance element, or an inductive coil. As is known, there are different types of Hall Effect elements, for example, a vertical Hall element, and a Circular Vertical Hall (CVH) element. As is also known, there are different types of magnetoresistance elements, for example, a semiconductor magnetoresistance element such as Indium Antimonide (InSb), a giant magnetoresistance (GMR) element, an anisotropic magnetoresistance element (AMR), a tunneling magnetoresistance (TMR) element, and a magnetic tunnel junction (MTJ). The magnetic field sensing element may be a single element or, alternatively, may include two or more magnetic field sensing elements arranged in various configurations, e.g., a half bridge or full (Wheatstone) bridge. Depending on the device type and other application requirements, the magnetic field sensing element may be a device made of a type IV semiconductor material such as Silicon (Si) or Germanium (Ge), or a type III-V semiconductor material like Gallium-Arsenide (GaAs) or an Indium compound, e.g., Indium-Antimonide (InSb). The phrase "set of magnetic field elements" shall mean "one or more magnetic field sensing elements". For example, and without limitation, each of position sensors 142A-D, 222, 223, 322, 323, 422, and 500 may include any of the listed magnetic field sensing element types.

The concepts and ideas described herein may be implemented, at least in part, via a computer program product, (e.g., in a non-transitory machine-readable storage medium such as, for example, a non-transitory computer-readable medium), for execution by, or to control the operation of, data processing apparatus (e.g., a programmable processor, a computer, or multiple computers). Each such program may be implemented in a high-level procedural or object-oriented programming language to work with the rest of the computer-based system. However, the programs may be implemented in assembly, machine language, or Hardware Description Language. The language may be a compiled or an interpreted language, and it may be deployed in any form, including as a stand-alone program or as a module, component, subroutine, or another unit suitable for use in a computing environment. A computer program may be deployed to be executed on one computer or multiple computers at one site or distributed across multiple sites and interconnected by a communication network. A computer program may be stored on a non-transitory machine-readable medium that is readable by a general or special-purpose programmable computer for configuring and operating the computer when the non-transitory machine-readable medium is read by the computer to perform the processes described herein. For example, the processes described herein may also be implemented as a non-transitory machine-readable storage medium, configured with a computer program, where upon execution, instructions in the computer program cause the computer to operate in accordance with the processes. A non-transitory machine-readable medium may include but is not limited to a hard drive, compact disc, flash memory, non-volatile memory, or volatile memory. The term unit (*e.g.,* an addition unit, a multiplication unit, *etc.*)*,* as used throughout the disclosure may refer to hardware (*e.g*., an electronic circuit) that is configured to perform a function (*e.g.,* addition or multiplication, *etc.*)*,* software that is executed by at least one processor, and configured to perform the function, or a combination of hardware and software.

Also, for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements.

As used herein in reference to an element and a standard, the term "compatible" means that the element communicates with other elements in a manner wholly or partially specified by the standard, and would be recognized by other elements as sufficiently capable of communicating with the other elements in the manner specified by the standard. The compatible element does not need to operate internally in a manner specified by the standard.

Having described preferred embodiments, which serve to illustrate various concepts, structures and techniques, which are the subject of this patent, it will now become apparent that other embodiments incorporating these concepts, structures and techniques may be used. Accordingly, it is submitted that the scope of the patent should not be limited to the described embodiments but rather should be limited only by the spirit and scope of the following claims.

## Claims

1. A relay, comprising:
a housing enclosure;
a first terminal;
a second terminal;
an armature that is disposed inside the housing enclosure, the armature being arranged to assume one of an engaged position and a disengaged position, such that when the armature is in the engaged position the first terminal is electrically coupled to the second terminal by the armature, and when the armature is in the disengaged position, the first terminal is electrically isolated from the second terminal as a result of the armature being removed from at least one of the first terminal and/or the second terminal;
a solenoid that is disposed inside the housing enclosure and arranged to actuate the armature between the disengaged position and the engaged position; and
a position sensor that is disposed inside the housing enclosure, the position sensor being arranged to monitor a position of the armature and output an indication of whether the armature is in the disengaged position or the engaged position.

2. The relay of claim 1, further comprising one or more additional terminals that are coupled to the position sensor and arranged to enable an external controller to receive signals from the position sensors.

3. The relay of claim 1, further comprising a permanent magnet that is coupled to the armature, wherein the position sensor is arranged to monitor the position of the armature by sensing the position of the permanent magnet.

4. The relay of claim 1, further comprising a magnetic lock that is arranged to maintain the armature in the engaged position or the disengaged position during periods in which the solenoid is not energized.

5. The relay of claim 1, further comprising a current sensor that is disposed inside the housing enclosure and configured to measure a level of electrical current through the armature.

6. The relay of claim 1, further comprising a connecting member that is actuated by the solenoid and arranged to move the armature between the engaged position and the disengaged position.

7. The relay of claim 6, further comprising a permanent magnet that is coupled to the connecting member, wherein the position sensor is arranged to monitor the position of the armature by sensing a position of the permanent magnet.

8. The relay of claim 1, wherein the position sensor includes a built-in solenoid driver that is arranged to drive the solenoid.

9. A relay, comprising:
a chassis;
a first terminal;
a second terminal;
a first permanent magnet disposed inside the chassis;
an armature that is disposed inside the chassis, the armature being arranged to assume one of an engaged position and a disengaged position, such that when the armature is in the engaged position the first terminal is electrically coupled to the second terminal by the armature, and when the armature is in the disengaged position, the first terminal is electrically isolated from the second terminal as a result of the armature being removed from at least one of the first terminal and/or the second terminal;
a connecting member that is coupled to the first permanent magnet and the armature; and
a solenoid that is arranged to move the armature between the engaged position and the disengaged position by causing the first permanent magnet to pivot between a first position and a second position; and
a position sensor that is disposed adjacent to the armature, the position sensor being arranged to monitor a position of the armature and output an indication of whether the armature is in the disengaged position or the engaged position.

10. The relay of claim 9, wherein the chassis includes a first supporting wall extending through an interior of the chassis, the first supporting wall being disposed between the armature and the first permanent magnet, the first supporting wall including a protrusion which the first permanent magnet is arranged to pivot about.

11. The relay of claim 10, wherein the armature is disposed between the position sensor and the first supporting wall.

12. The relay of claim 10, wherein the chassis includes a second supporting wall that is inserted in a first recess in the first permanent magnet and a third supporting wall that is inserted in a second recess of the first permanent magnet, wherein the first supporting wall and the second supporting wall are arranged to restrict movements of the first permanent magnet as the first permanent magnet pivots about the protrusion.

13. The relay of claim 12, wherein the position sensor is disposed between the first supporting wall and the second supporting wall.

14. The relay of claim 12, wherein the position sensor is disposed between the first supporting wall and the third supporting wall.

15. The relay of claim 9, wherein the position sensor is coupled to an exterior surface of a sidewall of the relay.

16. The relay of claim 9, wherein the position sensor is positioned adjacent to the connecting member and arranged to measure a position of the connecting member.

17. The relay of claim 16, further comprising a second permanent magnet that is coupled to the connecting member, wherein the position sensor is arranged to monitor the position of the armature by sensing a position of the second permanent magnet.

18. The relay of claim 9, wherein the position sensor is coupled to an interior surface of a sidewall of the relay.

19. The relay of claim 9, further comprising a current sensor that is disposed inside the chassis and arranged to detect an electrical current through the armature.

20. The relay of claim 5 or 19, wherein the armature includes a notch that is formed therein, and the current sensor is disposed adjacent to the notch.

21. A relay, comprising:
a housing enclosure;
a first terminal;
a second terminal;
a first dielectric barrier that is disposed inside the housing enclosure and coupled to the first terminal;
a second dielectric barrier that is disposed inside the housing enclosure and coupled to the second terminal;
an armature that is disposed inside the housing enclosure, the armature being arranged to assume one of an engaged position and a disengaged position, such that when the armature is in the engaged position the first terminal is electrically coupled to the second terminal by the armature, and when the armature is in the disengaged position, the first terminal is electrically isolated from the second terminal as a result of the armature being removed from at least one of the first terminal and/or the second terminal;
a solenoid that is disposed inside the housing enclosure and arranged to actuate the armature between the disengaged position and the engaged position; and
a voltage sensor that is disposed inside the housing enclosure and coupled between first dielectric barrier and the second dielectric barrier, the voltage sensor being arranged to monitor a voltage across the first dielectric barrier and the second dielectric barrier and output an indication of whether an electrical current is flowing through the armature based on the voltage across the first dielectric barrier and the second dielectric barrier falling below a predetermined threshold.

22. A relay, comprising:
a chassis;
a first terminal;
a second terminal;
an armature that is disposed inside the chassis, the armature being arranged to assume one of an engaged position and a disengaged position, such that when the armature is in the engaged position the first terminal is electrically coupled to the second terminal by the armature, and when the armature is in the disengaged position, the first terminal is electrically isolated from the second terminal as a result of the armature being removed from at least one of the first terminal and/or the second terminal;
a shaft that is coupled to the armature, the shaft having a target mounted thereon; and
a solenoid that is arranged to move the armature between the engaged position and the disengaged position; and
a position sensor that is disposed adjacent to the shaft, the position sensor being arranged to monitor a position of the target and output an indication of whether the armature is in the disengaged position or the engaged position.

23. A relay, comprising:
a housing enclosure;
a first terminal;
a second terminal;
an armature that is disposed inside the housing enclosure, the armature being arranged to assume one of an engaged position and a disengaged position, such that when the armature is in the engaged position the first terminal is electrically coupled to the second terminal by the armature, and when the armature is in the disengaged position, the first terminal is electrically isolated from the second terminal as a result of the armature being removed from at least one of the first terminal and/or the second terminal;
a solenoid that is disposed inside the housing enclosure and arranged to actuate the armature between the disengaged position and the engaged position; and
a current sensor that is arranged to monitor the armature and output an indication of whether an electrical current is flowing through the armature.

24. A relay, comprising:
a chassis;
a first terminal;
a second terminal;
a first permanent magnet disposed inside the chassis;
an armature that is disposed inside the chassis, the armature being arranged to assume one of an engaged position and a disengaged position, such that when the armature is in the engaged position the first terminal is electrically coupled to the second terminal by the armature, and when the armature is in the disengaged position, the first terminal is electrically isolated from the second terminal as a result of the armature being removed from at least one of the first terminal and/or the second terminal;
a connecting member that is coupled to the first permanent magnet and the armature; and
a solenoid that is arranged to move the armature between the engaged position and the disengaged position by causing the first permanent magnet to pivot between a first position and a second position; and
a first position sensor that is disposed adjacent to the armature, the first position sensor being arranged to output a first signal that is indicative of a position of the armature;
a second position sensor that is disposed adjacent to the armature, the second position sensor being arranged to output a first signal that is indicative of a position of the armature; and
an arbiter circuit that is configured to detect whether the first signal is in agreement with the second signal and output an indication of whether the armature is in the engaged position or the disengaged position when the first signal and the second signal are in agreement.

25. The relay of claim 24, wherein the arbiter circuit is further configured to output an indication of an error when the first signal and the second signal are not in agreement.

26. The relay of claim 24, wherein the arbiter circuit is integrated into one of the first position sensor and the second position sensor.
